(19) Europäisches Patentamt
European Patent Office
Office européen des brevets

(11) Veröffentlichungsnummer : **0 036 923**
**B1**

(12) # EUROPÄISCHE PATENTSCHRIFT

(45) Veröffentlichungstag der Patentschrift : **18.01.84**

(51) Int. Cl.³ : **G 02 F 1/133**, C 08 G 61/02

(21) Anmeldenummer : **81100435.7**

(22) Anmeldetag : **22.01.81**

(54) **Flüssigkristallanzeige und Verfahren zu ihrer Herstellung.**

(30) Priorität : **28.03.80 CH 2451/80**

(43) Veröffentlichungstag der Anmeldung : **07.10.81 Patentblatt 81/40**

(45) Bekanntmachung des Hinweises auf die Patenterteilung : **18.01.84 Patentblatt 84/03**

(84) Benannte Vertragsstaaten : **CH DE FR GB IT LI NL**

(56) Entgegenhaltungen :
**DE-A- 2 544 940**
**DE-B- 1 216 255**
**FR-A- 2 282 651**
**GB-A- 2 010 529**
**US-A- 3 288 728**
**US-A- 3 600 216**
**US-A- 3 781 087**

(73) Patentinhaber : **CONTRAVES AG**
**Schaffhauserstrasse 580**
**CH-8052 Zürich (CH)**

(72) Erfinder : **Schmidt, Walter, Dr.**
**Oberwiesenstrasse 73f**
**CH-8050 Zürich (CH)**

**EP 0 036 923 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Flüssigkristallanzeige und Verfahren zu ihrer Herstellung

Die Erfindung betrifft eine Flüssigkristallanzeige, bestehend aus zwei planparallelen durchsichtigen Trägern, zwei auf den Aussenseiten der Träger angebrachten Polarisatorfolien, einem zwischen den Trägern eingeschlossenen flüssigkristallinen Material und einer Verkapselung. Die Erfindung betrifft ausserdem eine Anwendung eines an sich bekannten Verfahrens zur Herstellung einer solchen Flüssigkristallanzeige.

Für die Herstellung von Flüssigkristallanzeigen wird eine dünne Schicht von flüssigkristallinem Material zwischen zwei Glasplatten, die mit elektrisch leitenden Schichten versehen sind, hermetisch eingeschlossen. Durch die Einwirkung eines magnetischen oder elektrischen Feldes können die optischen Eigenschaften der flüssigkristallinen Schicht verändert werden. Bei den nematischen Flüssigkristallanzeigen sind aussen auf den beiden Glasplatten Polarisatorfolien aufgeklebt, die einfallendes Licht je nach dem Zustand der flüssigkristallinen Schicht durchlassen oder absorbieren.

Die Lebensdauer moderner Flüssigkristallanzeigen wird durch die Funktionsdauer der Polarisatorfolien begrenzt, die durch die Einwirkung von Feuchtigkeit mit der Zeit ausbleichen und sich von der Glasplatte lösen.

Die Lebensdauer wird auch begrenzt durch die Einwirkung von Feuchtigkeit auf den Kleber, der die beiden planparallelen durchsichtigen Träger miteinander verbindet : wenn die Träger aus Natriumsilikatglas bestehen, reagiert die Feuchtigkeit mit der Oberfläche des Glases, es wird dabei Natriumhydroxyd gebildet, das die Klebverbindung schwächt oder zu lösen vermag. Solche Vorgänge führen zum Ausfall der Anzeige, die entsprechenden Probleme sind bisher nicht gelöst worden : Flüssigkristallanzeigen haben insbesondere im militärischen Bereich bei den stark der Witterung ausgesetzten Geräten wegen der erwähnten Mängel noch keine weite Anwendung gefunden.

Zum Schutz von Flüssigkristallanzeigen gegen äussere Einflüsse und insbesondere gegen Feuchtigkeit sind zwar einige Schutzmassnahmen bekannt. So ist z. B. aus der GB-A-2 010 529 bekannt, eine endlose Polarisatorfolie, die für Anzeigen bestimmt ist, mit einer Lackschicht zu schützen. Ferner ist z. B. aus der DE-A-2 544 940 bekannt, den Polarisator einer Anzeige auf seinem seitlichen Rand mit einer Lackschicht zu schützen. In beiden Fällen bleiben jedoch die Klebverbindungen zwischen den Trägern ungeschützt. Zwar ist aus der US-A-3 781 087 bekannt, eine Anzeige mit Ausnahme eines Fensters in der oberen Platte in ein Kunstharz einzugiessen ; dabei werden aber auch die Kontaktstellen der elektrischen Anschlüsse eingegossen, so dass die Anzeige während der Schaffung der Kontakte einige Zeit lang der Verschmutzung und der Feuchtigkeit ausgesetzt bleibt und auch Probleme bezüglich der Sauberkeit der Kontaktstellen entstehen. Ausserdem ist der Stand der Technik nach dem letztgenannten Patentdokument nicht kombinierbar mit dem Stand der Technik nach den beiden anderen Patentdokumenten, weil es sich im einen Fall um einen Schutz durch Eingiessen, im anderen Fall um einen Schutz durch Lackieren handelt.

Der Erfindung liegt die Aufgabe zugrunde, eine Flüssigkristallanzeige zu schaffen, bei der die feuchtigkeitsempfindlichen Komponenten, wie beispielsweise Polarisatorfolien und Klebverbindungen, gegen die Einwirkung von Feuchtigkeit und aggressiven Stoffen, wie beispielsweise saure, basische oder salzartige Flüssigkeiten und Gase geschützt sind. Die Flüssigkristallanzeige soll mit Hilfe eines einfachen Verfahrens ausgebildet werden können.

Diese Aufgabe wird bei einer Flüssigkristallanzeige der eingangs genannten Art gelöst durch eine die Anzeige mit Ausnahme der Kontaktstellen umschliessende Verkapselung aus einem Polymerisat der allgemeinen Formel :

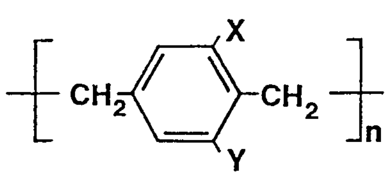

worin die Substituenten X und Y Chlor oder Wasserstoff, und n der Polymerisationsgrad bedeuten, wobei $n > 5\,000$ ist und die Schichtdicke der Verkapselung 1 µm bis 150 µm beträgt.

Die erfindungsgemässe Verkapselung der Flüssigkristallanzeige hat den Vorteil, dass sie ausserordentlich wasserundurchlässig, optisch isotrop und farblos ist. Ein weiterer Vorteil ist, dass die hochglänzenden Oberflächen der Polarisatorfolien nach der Verkapselung leicht matt erscheinen, was zu einer Verbesserung des optischen Erscheinungsbildes der Flüssigkristallanzeige führt, da dadurch unerwünschte Reflexe vermieden werden. Zusätzlich wird durch die Beschichtung die Winkelabhängigkeit des Kontrastes der Anzeige verbessert. Die Verkapselung schützt auch die üblicherweise aus einem organischen Kleber bestehenden Klebverbindungen zwischen den beiden aus einem Natriumsilikatglas bestehenden Trägern. Durch die Verkapselung wird das Eindringen von Feuchtigkeit in die Flüssigkristallanzeige stark erschwert und die Lebensdauer der Anzeigen verlängert. Eine feuchtedichte Verkapselung ist wichtig, da Wasser mit der Oberfläche des Natriumsilikatglases reagiert

und dabei Natriumhydroxid gebildet wird, das die Klebverbindung schwächt oder zu lösen vermag.

Die Vorteile der erfindungsgemässen Verkapselung sollen durch die in unserem Laboratorium durchgeführten Untersuchungen erläutert werden. Handelsübliche Flüssigkristallanzeigen ohne Verkapselung wurden bei 95 % relativer Feuchte und einer Temperatur von 80 °C gelagert. Nach 10 Minuten wurden die Anzeigen untersucht. Die Polarisatorfolien waren bereits teilweise abgelöst und stark gebleicht. Nach 20 Minuten konnten die Polarisatorfolien bereits leicht abgezogen werden.

Flüssigkristallanzeigen der gleichen Art wurden erfindungsgemäss verkapselt und anschliessend den oben genannten Testbedingungen unterworfen. Nach 20 Stunden konnten noch keine nachteiligen Veränderungen an den Anzeigen festgestellt werden.

Das erfindungsgemässe Verfahren zur Herstellung einer solchen Flüssigkristallanzeige ist dadurch gekennzeichnet, dass die Abscheidungsrate grösser ist als 1 nm/s.

Das erfindungsgemässe Verfahren hat den Vorteil, dass sich beliebig geformte Flüssigkristallanzeigen mit einer gleichmässig dicken Schicht überziehen lassen, die ausserdem im wesentlichen keine Poren aufweist. Weitere Vorteile der Flüssigkristallanzeige und des Verfahrens zu seiner Herstellung ergeben sich aus den Unteransprüchen.

Im folgenden wird ein Ausführungsbeispiel anhand der Zeichnung im einzelnen beschrieben.

Die Fig. 1 zeigt im übergrossen Massstab eine im Schnitt gezeichnete Darstellung einer Flüssigkristallanzeige 10. Die flüssigkristalline Schicht 19 wird durch die beiden planaren Träger 11 und 12 und durch die Randabdichtung 21 eingeschlossen. Die Träger 11 und 12 bestehen üblicherweise aus einem Natriumsilikatglas und sind mit elektrisch leitenden Schichten 17 und 18 überzogen, die an den Kontaktstellen 22 und 22′ von aussen kontaktiert werden. Die Randabdichtung 21 besitzt mindestens eine, hier nicht dargestellte, Oeffnung, durch welche das flüssigkristalline Material in den freien Raum gebracht wird. Die Oeffnung wird mit metallischem Lot oder einem Klebmittel versiegelt, das üblicherweise vom Typ eines Epoxyharzes ist. Auf den Trägern 11 und 12 sind aussen die beiden Polarisatorfolien 13 und 14 mit einem die Schichten 24 und 25 bildenden Klebmittel aufgeklebt. Solche Folien sind als Klebfolien im Handel erhältlich. Die Verkapselung 15 besteht aus einer dünnen Schicht von unsubstituiertem oder 2-mono- oder 2,2′-dichlor-substituiertem Polyparaxylylen, die jeweils einen Polymerisierungsgrad n ⩾ 5 000 aufweisen, und die im Handel als Parylene N, Parylene C bzw. Parylene D bekannt sind und den nachfolgenden Formeln entsprechen :

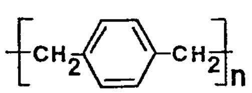
Parylene N

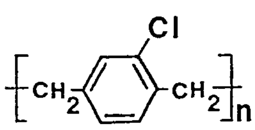
Parylene C

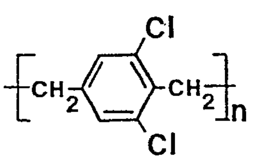
Parylene D

Die Verkapselung mit Parylen wird auf an sich bekannte Weise in einer im wesentlichen aus einem Verdampfungsofen, einer Pyrolysekammer und einer Beschichtungskammer bestehenden Anlage gemäss folgender chemischer Reaktion durchgeführt :

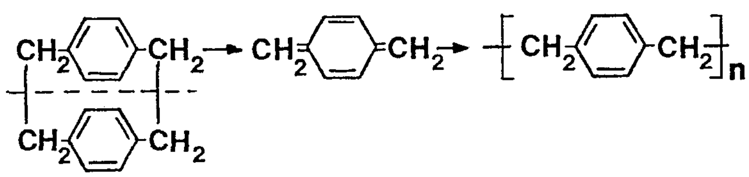
Parylene N

Als Edukt dient Di-para-xylylen, das bei etwa 175 °C und einem Druck von 1.33 mbar verdampft wird und durch Pyrolyse bei etwa 680 °C und 0.67 mbar zu dem reaktiven dampfförmigen Monomer Paraxylylen umgewandelt wird. Der Monomerdampf polymerisiert auf dem bei Raumtemperatur befindlichen Flüssigkristallanzeiger fortlaufend und gleichmässig bei einem Druck von 0.13 mbar. Das Produkt Parylene N ist hochkristallin und besitzt einen Polymerisierungsgrad n der grösser als 5 000 ist. Weitere Einzelheiten ergeben sich aus den US-Patentschriften 3 288 728 und 3 342 754.

Für eine gute Sichtbarkeit der Anzeige als auch für eine vorteilhafte Winkelabhängigkeit des Kontrastes der Anzeige ist die Transparenz der Verkapselung von entscheidender Bedeutung. Es wurde gefunden, dass optimale optische Bedingungen mit einer matten Verkapselung erhalten werden. Weiter wurde gefunden, dass eine solche optimale Transparenz bei einer Abscheidungsrate von grösser als 1 nm/s erreicht wird.

**Ansprüche**

1. Flüssigkristallanzeige (10), bestehend aus zwei planparallelen durchsichtigen Trägern (11, 12), zwei auf den Aussenseiten der Träger angebrachten Polarisatorfolien (13, 14), einem zwischen den Trägern eingeschlossenen flüssigkristallinen Material (19) und einer Verkapselung (15), dadurch gekennzeichnet, dass die die Anzeige mit Ausnahme der Kontaktstellen (22, 22') umschliessende Verkapselung (15) aus einem Polymerisat der allgemeinen Formel :

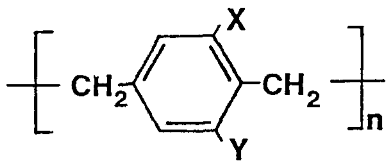

besteht und eine Schichtdicke von 1 µm bis 150 µm aufweist, wobei in der Formel die Substituenten X und Y Chlor oder Wasserstoff und n den Polymerisationsgrad bedeuten und n grösser als 5 000 ist.

2. Anwendung des an sich bekannten Verfahrens zur Herstellung der im Anspruch 1 erwähnten Polymerisate mit einer Abscheidungsrate, die grösser ist als 1 nm/s, für die Herstellung einer Flüssigkristallanzeige (10) nach Anspruch 1.

**Claims**

1. Liquid crystal display (10), consisting of two transparent carriers (11, 12) in parallel planes, two polarising foils (13, 14) mounted on the outsides of the carriers, a liquid crystalline material (19) enclosed between the carriers, and a cladding (15), characterised in that the cladding (15) enclosing the display with the exception of the contact points (22, 22') has a layer thickness of from 1 µm to 150 µm and consists of a polymer with the general formula :

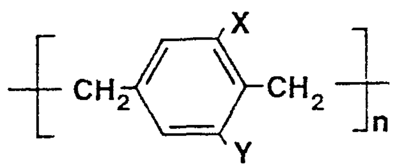

wherein in the formula the substituents X and Y indicate chlorine or hydrogen and n, the degree of polymerisation, is greater than 5 000.

2. Application of the process known *per se* for producing the polymers referred to in claim 1, having a rate of precipitation greater than 1 nm/s, for producing a liquid crystal display (10) according to claim 1.

**Revendications**

1. Dispositif d'affichage à cristaux liquides (10), constitué de deux supports (11, 12) transparents à faces planes et parallèles, de deux feuilles de polariseur (13, 14) appliquées sur les faces extérieures des supports, d'une matière (19) en cristaux liquides, enfermée entre les supports, et d'un encapsulage (15), dispositif caractérisé en ce que l'encapsulage (15), enfermant ce dispositif à l'exception des points de contact (22, 22'), est constitué d'un polymérisat répondant à la formule suivante :

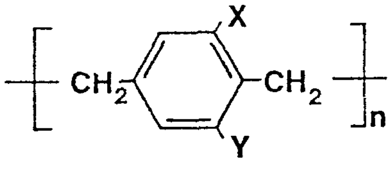

et présente une épaisseur de couche de 1 à 150 microns, pendant que, dans la formule, les substituants X et Y représentent un atome de chlore ou d'hydrogène, et n le taux de polymérisation, n étant plus grand que 5 000.

2. Utilisation du procédé connu en soi pour la fabrication des polymérisats cités dans la revendication 1 avec une vitesse de dépôt qui est supérieure à 1 nm/s pour la fabrication d'un dispositif d'affichage à cristaux liquides (10) suivant la revendication 1.

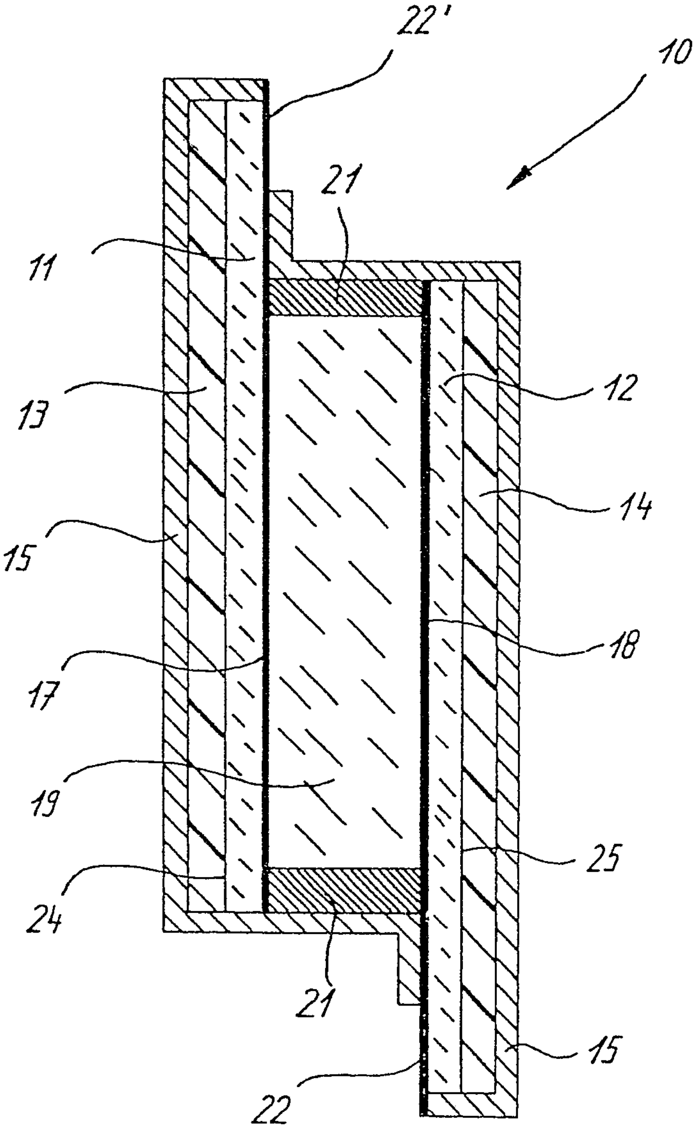


Fig. 1